(19)

**Europäisches Patentamt**
**European Patent Office**
**Office européen des brevets**

(11) **EP 3 406 967 A1**

(12) **EUROPEAN PATENT APPLICATION**

(43) Date of publication:
**28.11.2018 Bulletin 2018/48**

(51) Int Cl.:
**F21V 8/00** (2006.01)

(21) Application number: **18179854.7**

(22) Date of filing: **12.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2014 CN 201410048871**

(62) Document number(s) of the earlier application(s) in accordance with Art. 76 EPC:
**15154922.7 / 2 908 049**

(71) Applicant: **Valeo Lighting Hubei Technical Center Co Ltd**
**430014 Wuhan, Hubei (CN)**

(72) Inventor: **LIN, Liang**
**WUHAN, 430014 (CN)**

(74) Representative: **Schaffner, Jean**
**Valeo Vision S.A.S.**
**Industrial Property Dpt**
**34, rue Saint-André**
**93012 Bobigny Cedex (FR)**

Remarks:
This application was filed on 26-06-2018 as a divisional application to the application mentioned under INID code 62.

(54) **LIGHT-GUIDE ILLUMINATION ASSEMBLY, VEHICLE LAMP AND METHOD FOR LOCATING LIGHT-GUIDE MEMBER**

(57) The present invention discloses a light-guide illumination assembly for an automotive vehicle, a vehicle lamp, and a method for locating a light-guide member used in a vehicle lamp of an automotive vehicle. The light-guide illumination assembly comprises a housing; a printed circuit board assembly, provided with a first mounting side and a second mounting side opposite to the first mounting side, the second mounting side and the housing being fixed together; a light-emitting diode, which is provided with a light-emitting surface and a mounting surface opposite to the light-emitting surface, and which is arranged on the first mounting side of the printed circuit board assembly by means of the mounting surface; and a light-guide member, a light incident surface of the light-guide member being configured to face the light-emitting surface of the light-emitting diode, wherein the light-guide member is provided with a locating part which is engaged directly with the housing. By virtue of the above structure, a locating dimension chain can be shortened, so that the locating precision is improved.

Fig. 1

## Description

### Technical Field

The present invention relates to the field of automotive vehicles and particularly relates to a light-guide illumination assembly for an automotive vehicle, a vehicle lamp and a method for locating a light-guide member in the vehicle lamp for the automotive vehicle.

### Background Art

In existing vehicle lamps of automotive vehicles, especially in daytime running illumination lamps, more and more light-emitting diodes are used as light sources, as a result, light-guide members are often utilized to conduct and distribute light from the light-emitting diodes. The locating precision of the light-guide member is closely related to the light conduction and distribution efficiency of the light-guide members. In the prior art, the light-guide members are often located by bendable sleeves, the locating process is complicated and is limited by many factors, moreover, locating errors of the light-guide members can be caused by the deformation of the bendable sleeves; in addition, the bendable sleeves also lead to increased costs.

Therefore, there is a need for a device and method which has a simple-structure device and is capable of accurately and effectively locating the light-guide members in the prior art.

### Summary of the Present Invention

One object of the present invention is to provide a light-guide illumination assembly for an automotive vehicle, which can be used for reducing the locating dimension chain of a light-guide member and accurately and effectively locating the light-guide member.

A further object of the present invention is to provide a vehicle lamp which is provided with the light-guide illumination assembly and can be used for improving the locating precision of the light-guide member so as to improve the light conduction and distribution efficiency of the light-guide member.

A still further object of the present invention is to provide a method for locating a light-guide member in a vehicle lamp for an automotive vehicle.

In order to realize the objects, the technical solution of the present invention is implemented in the following ways.

According to a first aspect of the present invention, there is provided a light-guide illumination assembly for an automotive vehicle, the assembly comprising:

a housing;
a printed circuit board assembly provided with a first mounting side and a second mounting side which is opposite to the first mounting side and which is fixed together with the housing;
a light-emitting diode provided with a light-emitting surface and a mounting surface opposite to the light-emitting surface, said light-emitting diode being arranged on the first mounting side of the printed circuit board assembly by means of the mounting surface; and
a light-guide member, a light incident surface of said light-guide member being configured to face the light-emitting surface of the light-emitting diode,
wherein the light-guide member is provided with a locating part, and the locating part is engaged directly with the housing.

Further, the first mounting side of said printed circuit board assembly may be provided with a first locating surface, the second mounting side may be provided with a second locating surface, the distance from the light-emitting surface of the light-emitting diode to the first locating surface of the printed circuit board assembly is in a first locating precision range, the distance from the first locating surface to the second locating surface of the printed circuit board assembly is in a second locating precision range, the distance from the second locating surface of the printed circuit board assembly to the engaged position of the locating part of the light-guide member and the housing is in a third locating precision range, the distance from the light incident surface of the light-guide member to the engaged position of the locating part of the light-guide member and the housing is in a fourth locating precision range, and the locating precision of the distance from the light incident surface of said light-guide member to the light-emitting surface of the light-emitting diode is determined solely by the first locating precision range, the second locating precision range, the third locating precision range and the fourth locating precision range.

Still further, said printed circuit board assembly may comprise a printed circuit board and a heat radiator; the first mounting side of said printed circuit board assembly being a first side of the printed circuit board and wherein said heat radiator is arranged on a second side of said printed circuit board, which is opposite to the first side,, said heat radiator being engaged with the housing on one side, which is opposite to the printed circuit board, the second mounting side of said printed circuit board assembly being the side of said heat radiator, on which the heat radiator is engaged with the housing.

Yet further, the first side of said printed circuit board may be provided with a heat radiator locating surface; the distance from the second locating surface of the printed circuit board assembly to the heat radiator locating surface is in a fifth locating precision range; the distance from the heat radiator locating surface to the first locating surface of the printed circuit board assembly is in a sixth locating precision range; and said second locating precision range is determined solely by the fifth locating precision range and the sixth locating precision range.

Furthermore, said housing may comprise a first engagement part and a second engagement part, said first engagement part is engaged with the heat radiator, and the second engagement part is engaged with the locating part of the light-guide member.

Specifically, the locating part of the light-guide member is formed by a bulge or a groove on a side surface of the light-guide member.

According to a second aspect of the present invention, there is provided a vehicle lamp for an automotive vehicle, characterized by comprising a light-guide illumination assembly for an automotive vehicle according to any one of the above embodiments.

According to a third aspect of the present invention, there is provided a method for locating a light-guide member in a vehicle lamp for an automotive vehicle, the method comprising the following steps:

(a) mounting a light-emitting diode on a first mounting side of a printed circuit board assembly, keeping the distance from a light-emitting surface of the light-emitting diode to a first locating surface on the first mounting side of the printed circuit board assembly within a first locating precision range;

(b) fixing a second mounting side of the printed circuit board assembly to the housing, and keeping the distance from the first locating surface on the first mounting side of the printed circuit board assembly to a second locating surface on the second mounting side of the printed circuit board assembly within a second locating precision range; and

(c) directly engaging a locating part of the light-guide member with the housing such that the light-guide member is located to ensure that a light incident surface of the light-guide member faces the light-emitting surface of the light-emitting diode, keeping the distance from the second locating surface of the printed circuit board assembly to the engaged position of the locating part of the light-guide member and the housing within a third locating precision range, and keeping the distance from the light incident surface of the light-guide member to the engaged position of the locating part of the light-guide member and the housing within a fourth locating precision range,

wherein the locating precision of the distance from the light incident surface of said light-guide member to the light-emitting surface of the light-emitting diode is determined solely by the first locating precision range, the second locating precision range, the third locating precision range and the fourth locating precision range.

Further, the printed circuit board assembly may comprise a printed circuit board and a heat radiator, the first mounting side of said printed circuit board assembly may be a first side of said printed circuit board, and step (b) may comprise: mounting said heat radiator on the second side of said printed circuit board, which is opposite to the first side, and engaging said heat radiator with the housing on one side which is opposite to the printed circuit board, of the second mounting side of said printed circuit board assembly being the side of said heat radiator on which the heat radiator is engaged with the housing, , wherein the distance from the second locating surface of said printed circuit board assembly to a heat radiator locating surface on the first side of the printed circuit board is in a fifth locating precision range, the distance from the heat radiator locating surface to the first locating surface of the printed circuit board assembly is in a sixth locating precision range, and said second locating precision range is determined solely by the fifth locating precision range and the sixth locating precision range.

Still further, said housing may comprise a first engagement part and a second engagement part, said first engagement part is engaged with the heat radiator, and the second engagement part is engaged with the locating part of the light-guide member.

Specifically, the locating part of the light-guide member is formed by a bulge or a groove on a side surface of the light-guide member.

According to at least one aspect of the technical solution of the present invention, the light-guide member can be provided with a locating part engaged directly with the housing such that the locating dimension chain is shortened so as to improve the locating precision. According to the light-guide illumination assembly, the vehicle lamp and the method for locating a light-guide member of the present invention, the influence of added locating members on the locating precision of the light-guide member can be avoided, so that the risk of light leakage can be reduced.

**Description of the Drawings**

Figure 1 shows a schematic diagram of a light-guide illumination assembly according to one embodiment of the present invention; and

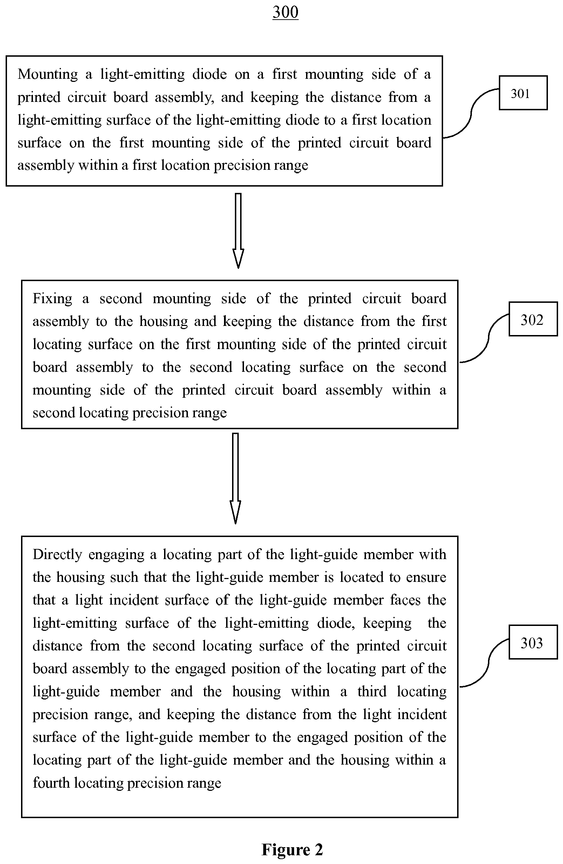

Figure 2 shows a schematic flow diagram of a method for locating a light-guide member in a vehicle lamp for an automotive vehicle according to one embodiment of the present invention.

**Particular Embodiments**

The technical solution of the present invention is further specifically described in combination with the following embodiments and the accompanying drawings. In the description, the same or similar reference numerals indicate the same or similar members. The following description of the embodiments of the present invention with reference to the drawings is intended to illustrate the general inventive concept of the present invention, but it should not be understood as a limitation to the present invention.

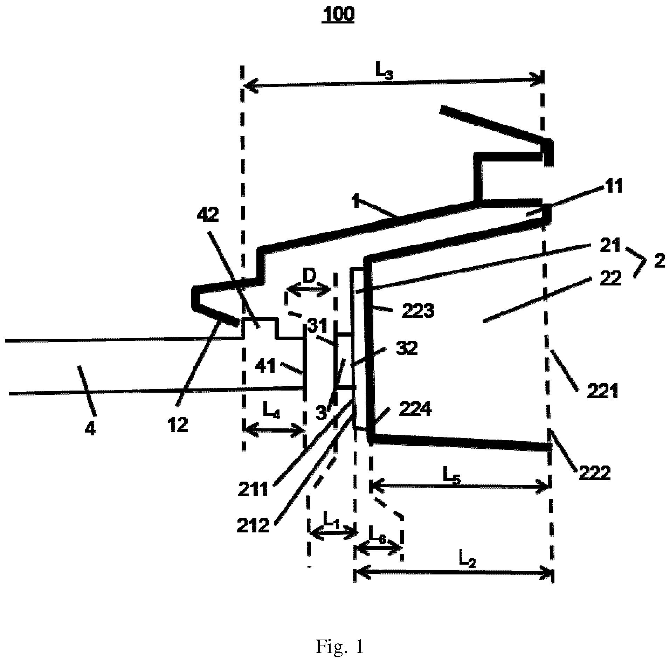

Figure 1 schematically illustrates a light-guide illumination assembly 100 for an automotive vehicle according to one embodiment of the present invention. The light-guide illumination assembly 100 comprises a housing 1, a printed circuit board assembly 2, a light-emitting diode 3 and a light-guide member 4. The printed circuit board assembly 2 is provided with a first mounting side 211 and a second mounting side 221 which is opposite to the first mounting side 211. The second mounting side 221 is fixed to the housing 1. The light-emitting diode 3 is provided with a light-emitting surface 31 and a mounting surface 32 opposite to the light-emitting surface 31, and the light-emitting diode 3 is arranged on the first mounting side 211 of the printed circuit board assembly 2 by means of the mounting surface 32. A light incident surface 41 of the light-guide member 4 is configured to face the light-emitting surface 31 of the light-emitting diode 3. The light-guide member 4 is provided with a locating part 42 engaged directly with the housing 1. During use, the light-emitting surface 31 of the light-emitting diode 3 needs to face the light incident surface 41 of the light-guide member 4 and an appropriate distance is kept between the light-emitting surface 31 and the light incident surface 41 of the light-guide member 4. Thus, light emitted from the light-emitting surface 31 of the light-emitting diode 3 can enter into the light-guide member 4 with a correct angle and intensity, thereby ensuring the conduction and distribution efficiency of light in the light-guide member 4 and preventing the light leakage from the light-guide member 4. That is, the aim of locating the light-guide member 4 is mainly to control the distance between the light-emitting surface 31 of the light-emitting diode 3 and the light incident surface 41 of the light-guide member 4.

In the prior art, the light-guide member 4 is generally accommodated in a bendable sleeve, and the bendable sleeve is connected to the housing 1. In the present invention, as shown in figure 1, the light-guide member 4 is directly located by use of the locating part 42 engaged directly with the housing 1, instead of the bendable sleeve, so that locating errors of the light-guide member 4, caused by self-deformation and locating of the bendable sleeve, can be avoided.

As an example, the first mounting side 211 of the printed circuit board assembly 2 is provided with a first locating surface 212, and the second mounting side 221 is provided with a second locating surface 222. The distance $L_1$ from the light-emitting surface 31 of the light-emitting diode 3 to the first locating surface 212 of the printed circuit board assembly 2 is kept within a first locating precision range, the distance $L_2$ from the first locating surface 212 to the second locating surface 222 of the printed circuit board assembly 2 is kept within a second locating precision range, the distance $L_3$ from the second locating surface 222 of the printed circuit board assembly 2 to the engaged position of the locating part 42 of the light-guide member 4 and the housing 1 is kept within a third locating precision range, and the distance $L_4$ from the light incident surface 41 of the light-guide member 4 to the engaged position of the locating part 42 of the light-guide member 4 and the housing 1 is kept within a fourth locating precision range. The distance from the light incident surface 41 of the light-guide member 4 to the light-emitting surface 31 of the light-emitting diode 3 can be obtained by virtue of an $L_3$-$L_1$-$L_2$-$L_4$ dimension chain. Thus, the locating precision of the distance from the light incident surface 41 of the light-guide member 4 to the light-emitting surface 31 of the light-emitting diode 3 is determined solely by the first locating precision range, the second locating precision range, the third locating precision range and the fourth locating precision range. For example, if the first locating precision range, the second locating precision range, the third locating precision range and the fourth locating precision range are $t_1$, $t_2$, $t_3$ and $t_4$, respectively, the locating precision of the distance from the light incident surface 41 of the light-guide member 4 to the light-emitting surface 31 of the light-emitting diode 3 is defined by the sum of the squares of $t_1$, $t_2$, $t_3$ and $t_4$, then it can be expressed as

$$T = \sqrt{(t_1)^2 + (t_2)^2 + (t_3)^2 + (t_4)^2} \qquad (1)$$

It can be seen that by virtue of the above structure, the locating precision of the distance from the light incident surface 41 of the light-guide member 4 to the light-emitting surface 31 of the light-emitting diode 3 is limited solely by the above four locating precision ranges, and the members related to the above four locating precision ranges are members which are directly related to the light-guide member 4 and the light-emitting diode 3 and cannot be omitted. The light-guide illumination assembly 100 according to the present invention adopts a dimension chain which is as short as possible, so as to avoid the influence of added members on the locating precision of the light-guide member 4.

In one example, the printed circuit board assembly 2 may comprise a printed circuit board 21 and a heat radiator 22; in this case, the first mounting side 211 of the printed circuit board assembly 2 is a first side of the printed circuit board 21, and the heat radiator 22 is arranged on a second side 223, which is opposite to the first side, of the printed circuit board 21; one side, which is opposite to the printed circuit board 21, of the heat radiator 22 is engaged with the housing; and the second mounting side 221 of the printed circuit board assembly 2 is one side, which is engaged with the housing 1, of the heat radiator 22. In application of the vehicle lamp (such as a daytime running vehicle lamp), a high-power light-emitting diode is possibly adopted, such that the heat generation thereof is high. In this case, the heat radiator 22 is generally an essential member.

As an example, in the case where the printed circuit board assembly 2 comprises a printed circuit board 21 and a heat radiator 22, the first side of the printed circuit board 21 may be provided with a heat radiator locating surface 224, the distance $L_5$ from the second locating surface 222 of the printed circuit board assembly 2 to the heat radiator locating surface 224 may meet a fifth locating precision range, and the distance $L_6$ from the heat radiator locating surface 224 to the first locating surface 221 of the printed circuit board assembly 2 may meet a sixth locating precision range. It can be seen that the distance $L_2$ from the first locating surface 212 of the printed circuit board assembly 2 to the second locating surface 222 can be obtained by virtue of an $L_5 + L_6$ dimension chain. Accordingly, the second locating precision range of $L_2$ can be determined solely by the fifth locating precision range and the sixth locating precision range. Given that the fifth locating precision range and the sixth locating precision range are $t_5$ and $t_6$, respectively, the second locating precision range can be expressed as

$$t_2 = \sqrt{(t_5)^2 + (t_6)^2} \qquad (2)$$

Hence, equation (1) can be written as follows

$$T = \sqrt{(t_1)^2 + (t_5)^2 + (t_6)^2 + (t_3)^2 + (t_4)^2} \qquad (3)$$

For example, if $t_1$ is +/- 0.1 mm, $t_5$ is +/- 0.2 mm, $t_6$ is +/- 0.1 mm, $t_3$ is +/-0.28 mm and $t_4$ is +/- 0.1 mm, T can be 0.4 mm.

This means that the locating precision of the distance from the light incident surface 41 of the light-guide member 4 to the light-emitting surface 31 of the light-emitting diode 3 is determined solely by the first locating precision range, the fifth locating precision range, the sixth locating precision range, the third locating precision range and the fourth locating precision range. In consideration of certain situations where the heat radiator 22 is an essential member, the above structure still ensures the dimension chain is as short as possible, so that the influence of the added members on the locating precision of the light-guide member 4 can be avoided.

In the above equations (1)-(3) of the present invention, a form of the sum of squares is adopted to describe the relation between the locating precision of the distance from the light incident surface 41 of the light-guide member 4 to the light-emitting surface 31 of the light-emitting diode 3 and the first through sixth locating precision ranges, but this is not necessary, other forms, such as algebraic sum, can be adopted for definition, for instance, equation (1) and equation (3) can be respectively written as:

$$T = t_1 + t_2 + t_3 + t_4 \qquad (4)$$

$$T = t_1 + t_5 + t_6 + t_3 + t_4 \qquad (5)$$

The above locating surface of the present invention can be used as a locating reference surface, which can be a real surface such as a certain surface formed by machining, and also can be a virtual surface such as a reference position which may be used as a reference for measurement or a surface where a virtual axis is positioned. As long as the surface can be used as a measurement reference to achieve an accurate or error-known or -controllable measurement, the surface can be used as the locating surface.

In one example, the housing 1 comprises a first engagement part 11 and a second engagement part 12, the first engagement part 11 is engaged with the heat radiator 22, and the second engagement part 12 is engaged with the locating part 42 of the light-guide member 4. Known engagement methods such as clamping and sleeving in the prior art can be adopted as specific engagement methods.

As an example, the locating part 42 of the light-guide member 4 can be formed by a bulge or groove on a side surface of the light-guide member 4. The side surface of the light-guide member 4 refers to a surface which has no incident or emergent light in design.

The present invention also provides a vehicle lamp for an automotive vehicle, comprising a light-guide illumination assembly according to any embodiment. As an example, the above housing can be a housing of the vehicle lamp.

The present invention also relates to a method 300 for locating a light-guide member in a vehicle lamp for an automotive vehicle, the method comprising the following steps:

step 301: mounting a light-emitting diode 3 on a first mounting side 211 of a printed circuit board assembly 2, and keeping the distance $L_1$ from a light-emitting surface 31 of the light-emitting diode 3 to a first locating surface 212 on the first mounting side 211 of the printed circuit board assembly 2 within a first locating precision range;

step 302: fixing a second mounting side 221 of the printed circuit board assembly 2 to the housing 1, and keeping the distance $L_2$ from the first locating surface 212 on the first mounting side 211 of the printed circuit board assembly 2 to a second locating surface 222 on the second mounting side 221 of the printed circuit board assembly 2 within a second locating precision range; and

step 303: directly engaging a locating part 42 of the light-guide member 4 with the housing 1 such that the light-guide member 4 is located to ensure that a light incident surface 41 of the light-guide member 4 faces the light-emitting surface 31 of the light-emitting diode 3, the distance $L_3$ from the second locating surface 222 of the printed circuit board assembly 2 to the engaged position of the locating part 42 of the light-guide member 4 and the housing 1 is in a third locating precision range, and the distance $L_4$ from the light incident surface 41 of the light-guide member 4 to the engaged position of the locating part 42 of the light-guide member 4 and the housing 1 is in a fourth locating precision range.

By virtue of the above method, the locating precision of the distance from the light incident surface 41 of said light-guide member 4 to the light-emitting surface 31 of the light-emitting diode 3 is determined solely by the first locating precision range, the second locating precision range, the third locating precision range and the fourth locating precision range.

As an example, step 302 may comprise: mounting said heat radiator 22 on a second side, which is opposite to the first side, of said printed circuit board 2 and engaging one side, which is opposite to the printed circuit board 2, of said heat radiator 22 with the housing 1; the second mounting side 221 of said printed circuit board assembly 2 is one side, which is engaged with the housing 1, of said heat radiator 22, wherein the distance from the second locating surface 222 of said printed circuit board assembly 2 to a heat radiator locating surface 224 on the first side 223 of the printed circuit board 21 is in a fifth locating precision range, and the distance from the heat radiator locating surface 224 to the first locating surface 212 of the printed circuit board assembly 2 is in a sixth locating precision range, thus said second locating precision range is determined solely by the fifth locating precision range and the sixth locating precision range.

The above method can be used for simply, accurately and effectively locating the light-guide member 4, thereby improving the light conduction and distribution efficiency of the light-guide member 4 and preventing light leakage.

Although the present invention has been described with reference to the drawings, the embodiments disclosed in the drawings are intended to schematically describe preferable embodiments of the present invention, and should not be understood as a limitation to the present invention.

Although some embodiments of the general concept of the present invention have been shown and described, it will be understood by those skilled in the art that, without departing from the principles and spirit of the present general inventive concept of the present invention, these embodiments can be changed, and the scope of the present invention is defined by the claims and their equivalents.

**Claims**

**1.** Light-guide illumination assembly (100) for an automotive vehicle, the assembly comprising:

a housing (1);

a printed circuit board assembly (2) provided with a first mounting side (211) and a second mounting side (221) which is opposite to the first mounting side (211) and which is fixed together with the housing (1);

a light-emitting diode (3) provided with a light-emitting surface (31) and a mounting surface (32) opposite to the light-emitting surface (31), said light-emitting diode (3) being arranged on the first mounting side (211) of the printed circuit board assembly (2) by means of the mounting surface (32); and

a light-guide member (4), a light incident surface (41) of said light-guide member being configured to face the light-emitting surface (31) of the light-emitting diode (3),

wherein said light-guide member (4) is provided with a locating part (42), and the locating part is engaged directly with the housing (1).

2. Light-guide illumination assembly (100) for an automotive vehicle according to Claim 1, **characterized in that** the first mounting side (211) of said printed circuit board assembly (2) is provided with a first locating surface (212), the second mounting side (221) is provided with a second locating surface (222), the distance from the light-emitting surface (31) of the light-emitting diode (3) to the first locating surface (212) of the printed circuit board assembly (2) is in a first locating precision range, the distance from the first locating surface (212) to the second locating surface (222) of the printed circuit board assembly (2) is in a second locating precision range, the distance from the second locating surface (222) of the printed circuit board assembly (2) to the engaged position of the locating part (42) of the light-guide member (4) and the housing (1) is in a third locating precision range, the distance from the light incident surface (41) of the light-guide member (4) to the engaged position of the locating part (42) of the light-guide member (4) and the housing (1) is in a fourth locating precision range, and the locating precision of the distance from the light incident surface (41) of said light-guide member (4) to the light-emitting surface (31) of the light-emitting diode (3) is determined solely by the first locating precision range, the second locating precision range, the third locating precision range and the fourth locating precision range.

3. Light-guide illumination assembly (100) for an automotive vehicle according to Claim 2, **characterized in that** said printed circuit board assembly (2) comprises a printed circuit board (21) and a heat radiator (22), the first mounting side (211) of said printed circuit board assembly (2) being a first side (223) of the printed circuit board (21) and wherein said heat radiator (22) is arranged on a second side of said printed circuit board (2), which is opposite to the first side (223)" said heat radiator (22) being engaged with the housing (1) on one side, which is opposite to the printed circuit board (223); the second mounting side (221) of said printed circuit board assembly (2) being the side of said heat radiator (22).on which the heat radiator (22) is engaged with the housing,

4. Light-guide illumination assembly (100) for an automotive vehicle according to Claim 3, **characterized in that** the first side (223) of said printed circuit board (21) is provided with a heat radiator locating surface (224); the distance from the second locating surface (222) of the printed circuit board assembly (2) to the heat radiator locating surface (224) is in a fifth locating precision range; the distance from the heat radiator locating surface (224) to the first locating surface (212) of the printed circuit board assembly (2) is in a sixth locating precision range; and said second locating precision range is determined solely by the fifth locating precision range and the sixth locating precision range.

5. Light-guide illumination assembly (100) for an automotive vehicle according to Claim 4, **characterized in that** said housing (1) comprises a first engagement part (11) and a second engagement part (12), said first engagement part (11) is engaged with the heat radiator (22), and the second engagement part (12) is engaged with the locating part (42) of the light-guide member (4).

6. Light-guide illumination assembly (100) for an automotive vehicle according to any one of Claims 1-5, **characterized in that** the locating part (42) of the light-guide member (4) is formed by a bulge or a groove on a side surface of the light-guide member (4).

7. Vehicle lamp for an automotive vehicle, **characterized by** comprising a light-guide illumination assembly (100) according to any one of Claims 1-6.

8. Method for locating a light-guide member (4) in a vehicle lamp for an automotive vehicle, the method comprising the following steps:

(a) mounting a light-emitting diode (3) on a first mounting side (211) of a printed circuit board assembly (2), and keeping the distance from a light-emitting surface (31) of the light-emitting diode (3) to a first locating surface (212) on the first mounting side of the printed circuit board assembly (2) within a first locating precision range;

(b) fixing a second mounting side (211) of the printed circuit board assembly (2) to the housing (1), and keeping the distance from the first locating surface (212) on the first mounting side (211) of the printed circuit board assembly (2) to a second locating surface (222) on the second mounting side (221) of the printed circuit board assembly (2) within a second locating precision range; and

(c) directly engaging a locating part (42) of the light-guide member (4) with the housing (1) such that the light-guide member (4) is located to ensure that a light incident surface (41) of the light-guide member (4) faces the light-emitting surface (31) of the light-emitting diode (3), keeping the distance from the second locating surface (222) of the printed circuit board assembly (2) to the engaged position of the locating part (42) of the light-guide member (4) and the housing (1) within a third locating precision range, and keeping the distance from the light incident surface (41) of the light-guide member (4) to the engaged position of the locating part of the light-guide member and the housing (1) within a fourth locating precision range,

wherein the locating precision of the distance from the light incident surface (41) of said light-guide member (4) to the light-emitting surface (31) of the light-emitting diode (3) is determined solely by the first locating precision range, the second locating precision range, the third locating precision range and the fourth locating precision range.

9. Method for locating a light-guide member (4) in a vehicle lamp for an automotive vehicle according to Claim 8, **characterized in that** the printed circuit board assembly (2) comprises a printed circuit board (21) and a heat radiator (22), the first mounting side (211) of said printed circuit board assembly (2) being a first side (223) of said printed circuit board (21), and

wherein step (b) comprises: mounting said heat radiator (22) on the second side of said printed circuit board (2), which is opposite to the first side (223), and engaging said heat radiator (22) with the housing (1) on one side which is opposite to the printed circuit board, of, the second mounting side (221) of said printed circuit board assembly (2) being the side of said heat radiator (22), on which the radiator (22) is engaged with the housing (1), wherein the distance from the second locating surface (222) of said printed circuit board assembly (2) to a heat radiator locating surface (224) on the first side of the printed circuit board is in a fifth locating precision range, the distance from the heat radiator locating surface (224) to the first locating surface (212) of the printed circuit board assembly (2) is in a sixth locating precision range, and said second locating precision range is determined solely by the fifth locating precision range and the sixth locating precision range.

10. Method for locating a light-guide member in a vehicle lamp for an automotive vehicle according to Claim 9, **characterized in that** said housing (1) comprises a first engagement part (11) and a second engagement part (12), said first engagement part (11) is engaged with the heat radiator (22), and the second engagement part (12) is engaged with the locating part (42) of the light-guide member (4).

11. Method for locating a light-guide member in a vehicle lamp for an automotive vehicle according to any one of Claims 8-10, **characterized in that** the locating part (42) of the light-guide member (4) is formed by a bulge or a groove on a side surface of the light-guide member (4).

**100**

Fig. 1

300

Mounting a light-emitting diode on a first mounting side of a printed circuit board assembly, and keeping the distance from a light-emitting surface of the light-emitting diode to a first location surface on the first mounting side of the printed circuit board assembly within a first location precision range

301

Fixing a second mounting side of the printed circuit board assembly to the housing and keeping the distance from the first locating surface on the first mounting side of the printed circuit board assembly to the second locating surface on the second mounting side of the printed circuit board assembly within a second locating precision range

302

Directly engaging a locating part of the light-guide member with the housing such that the light-guide member is located to ensure that a light incident surface of the light-guide member faces the light-emitting surface of the light-emitting diode, keeping the distance from the second locating surface of the printed circuit board assembly to the engaged position of the locating part of the light-guide member and the housing within a third locating precision range, and keeping the distance from the light incident surface of the light-guide member to the engaged position of the locating part of the light-guide member and the housing within a fourth locating precision range

303

**Figure 2**

Europäisches
Patentamt

European
Patent Office

Office européen
des brevets

**EUROPEAN SEARCH REPORT**

Application Number

EP 18 17 9854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/094241 A1 (YU ERIC [CN]) 18 April 2013 (2013-04-18) | 1,2,6-8,11 | INV. F21V8/00 |
| Y | * figure 7 * | 3-5,9,10 | |
| Y | US 2012/236598 A1 (GERMAIN STEVE [CA] ET AL) 20 September 2012 (2012-09-20) * figure 10 * | 3-5,9,10 | |

TECHNICAL FIELDS SEARCHED (IPC)

G02B

The present search report has been drawn up for all claims

| Place of search | Date of completion of the search | Examiner |
|---|---|---|
| Munich | 16 October 2018 | Orignac, Xavier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**EP 3 406 967 A1**

## ANNEX TO THE EUROPEAN SEARCH REPORT
## ON EUROPEAN PATENT APPLICATION NO.

EP 18 17 9854

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2018

| Patent document cited in search report | | Publication date | Patent family member(s) | | Publication date |
|---|---|---|---|---|---|
| US 2013094241 | A1 | 18-04-2013 | CN<br>US<br>WO | 102322601 A<br>2013094241 A1<br>2013053139 A1 | 18-01-2012<br>18-04-2013<br>18-04-2013 |
| US 2012236598 | A1 | 20-09-2012 | BR<br>CA<br>EP<br>US<br>WO | 112013023553 A2<br>2828783 A1<br>2686720 A2<br>2012236598 A1<br>2012125605 A2 | 06-12-2016<br>20-09-2012<br>22-01-2014<br>20-09-2012<br>20-09-2012 |

EPO FORM P0459

For more details about this annex : see Official Journal of the European Patent Office, No. 12/82